# EUROPÄISCHE PATENTSCHRIFT

(11) **EP 3 643 824 B1**
(45) Veröffentlichungstag und Bekanntmachung des Hinweises auf die Patenterteilung: **06.04.2022**
(21) Anmeldenummer: 20160660.5
(22) Anmeldetag: 03.03.2020
(51) Int. Cl.: D04B 35/18, D04B 27/26

(54) **KETTENWIRKMASCHINE UND VERFAHREN ZUM STEUERN EINER BEWEGUNG EINER ERSTE WIRKWERKZEUGE TRAGENDEN ERSTEN BARRE EINER KETTENWIRKMASCHINE**
WARP KNITTING MACHINE AND A METHOD FOR THE DETERMINATION OF A MOVEMENT OF A WARP KNITTING MACHINE FIRST BAR PROVIDED WITH FIRST KNITTING IMPLEMENTS
MÉTIER À MAILLES JETÉES ET PROCÉDÉ POUR LA COMMANDE DU MOUVEMENT D'UNE PREMIÈRE BARRE À ÉLÉMENTS DE TRICOTAGE DU MÉTIER À MAILLES JETÉES

(43) Veröffentlichungstag der Anmeldung: 29.04.2020
(73) Patentinhaber: KARL MAYER STOLL R&D GmbH, 63179 Obertshausen (DE)
(72) Erfinder: Alban, Rainer, 63500 Seligenstadt (DE); Ostheimer, Thomas, 63853 Mömlingen (DE); Partsch, Manfred, 63762 Großostheim (DE); Schadt, Heiko, 63853 Mömlingen (DE)
(74) Vertreter: Keil & Schaafhausen Patentanwälte PartGmbB

(56) Entgegenhaltungen:
- EP-A1- 3 333 292
- CN-A- 104 345 689
- US-A- 5 912 816

## Beschreibung

Die vorliegende Erfindung betrifft eine Kettenwirkmaschine mit mindestens einer ersten Barre, die erste Wirkwerkzeuge trägt, und mindestens einer zweiten Barre, die zweite Wirkwerkzeuge trägt, wobei die erste Barre durch einen Versatzantrieb in eine Versatzrichtung relativ zur zweiten Barre verlagerbar ist, wobei eine Sensoranordnung vorgesehen ist, die dazu ausgebildet ist eine Position der ersten Barre bei einer vorbestimmten Annäherung zwischen ersten Wirkwerkzeugen und zweiten Wirkwerkzeugen zu ermitteln.

Ferner betrifft die Erfindung ein Verfahren zum Steuern einer Bewegung einer erste Wirkwerkzeuge tragenden ersten Barre einer Kettenwirkmaschine, bei dem die ersten Barre in einer Versatzrichtung relativ zu einer zweiten Barre, die zweite Wirkwerkzeuge trägt, bewegt wird, wobei man eine Position der ersten Barre ermittelt, bei der mindestens ein erstes Wirkwerkzeug eine vorbestimmte Annäherung an ein zweites Wirkwerkzeug erreicht hat.

Eine derartige Kettenwirkmaschine und ein derartiges Verfahren sind aus EP 3 333 292 A1 oder US 5 912 816 A bekannt. In beiden Fällen wird eine Kamera verwendet, die einen Ausschnitt aus einem Wirkwerkzeugbereich aufnimmt, wobei dieser Ausschnitt auf einem Display dargestellt wird.

CN 104345 689 A zeigt eine ähnliche Ausgestaltung. Hier ist die Kamera über einen Sensor mit der Hauptwelle der Kettenwirkmaschine synchronisiert, so dass sie im Betrieb den Durchgang von Legenadeln durch eine Nadelgasse zwischen Wirknadeln aufnehmen kann.

Die Erfindung wird im Folgenden anhand einer Legebarre beschreiben, die relativ zu einer Wirknadelbarre bewegbar ist. Sie ist jedoch auch bei anderen Barrenkonstellationen anwendbar.

Eine Kettenwirkmaschine erzeugt eine Wirkware, indem Legenadeln relativ zu Wirknadeln bewegt werden, um Maschen zu bilden. Um eine gleichartige Bewegung der Legenadeln einerseits und der Wirknadeln andererseits zu erreichen, sind die Legenadeln an einer Legebarre und die Wirknadeln an einer Wirknadelbarre angeordnet. In der Regel trägt eine Legebarre mehrere Hundert oder sogar über Tausend Legenadeln und die Wirknadelbarre trägt eine entsprechend große Anzahl von Wirknadeln.

Die Legenadeln und die Wirknadeln sind jeweils mit einer vorbestimmten "Teilung" an ihren jeweiligen Barren angeordnet. Diese Teilung definiert die Positionen, an denen die Legenadeln an der Legebarre und die Wirknadeln an der Wirknadelbarre angeordnet sind. Die Teilung definiert dementsprechend einen Abstand zwischen den Wirknadeln bzw. den Legenadeln.

Im Betrieb der Kettenwirkmaschine müssen die Legenadeln durch Nadelgassen hindurchbewegt werden, die zwischen benachbarten Wirknadeln gebildet sind. Diese Nadelgassen haben eine relativ geringe Breite. Wenn man beispielsweise eine Teilung oder "Feinheit" von E24 verwendet, dann sind auf einer Länge von einem Zoll (25,4 mm) 24 Legenadeln bzw. 24 Wirknadeln angeordnet, so dass für eine Wirknadel und zugehöriger Nadelgasse nur etwas mehr als ein Millimeter zur Verfügung steht. Die Legebarre muss daher sehr genau positioniert werden, damit die Legenadeln kollisionsfrei durch die Nadelgassen zwischen den Wirknadeln hindurchbewegt werden können.

Im Betrieb einer Kettenwirkmaschine kommt es immer wieder zu Teilungsproblemen der Wirkwerkzeuge. Ursachen können Längenänderungen, Resonanzfrequenzen, Nadelverzug und Musterbewegungen sein. Bei derartigen Teilungsproblemen kann es zu Kollisionen zwischen Legenadeln und Wirknadeln kommen, was üblicherweise zu einer Beschädigung der Legenadeln und/oder der Wirknadeln führt, was wiederum ein Stillsetzen der Kettenwirkmaschine und eine aufwändige Reparatur erfordert. Auch wenn es noch nicht zu einer Kollision kommt, können derartige Teilungsprobleme dazu führen, dass die Qualität der erzeugten Wirkware nicht mehr den gewünschten Anforderungen entspricht. Eine derartige Wirkware ist dann unter Umständen Ausschuss.

Der Erfindung liegt die Aufgabe zugrunde, eine hohe Produktivität bei einer Kettenwirkmaschine zu erreichen.

Diese Aufgabe wird bei einer Kettenwirkmaschine der eingangs genannten Art dadurch gelöst, dass die Sensoranordnung einen elektrischen Schaltkreis mit einem Schalter aufweist, der als Schaltelement mindestens ein Sensor-Wirkwerkzeug aufweist.

Die Sensoranordnung kann also verwendet werden, um zu überprüfen, wie weit sich erste Wirkwerkzeuge und zweite Wirkwerkzeuge aneinander annähern. Dadurch kann man bereits vor einer Kollision entsprechende Abhilfe- oder Gegenmaßnahmen treffen oder man kann einen leichten Kontakt gezielt herstellen, ohne die Wirkwerkzeuge zu beschädigen. Auch wird auch das Risiko einer höheren Geräuschentwicklung geringgehalten. Der Begriff "Sensor- Wirkwerkzeug " wird hier gewählt, um das Sensor- Wirkwerkzeug von anderen Wirkwerkzeugen zu unterscheiden. Das Sensor- Wirkwerkzeug kann im Übrigen aber genauso ausgebildet sein, wie andere erste Wirkwerkzeuge auch. Wenn sich das Sensor-Wirkwerkzeug an ein zweites Wirkwerkzeug annähert, dann kann der Schalter geschlossen werden. Dieses Schließen zeigt an, dass sich das erste Wirkwerkzeug bis auf den vorbestimmten Abstand an das zweite Wirkwerkzeug angenähert hat. Das Schließen des Schalters lässt sich relativ leicht ermitteln.

Vorzugsweise ist die Sensoranordnung mit einer Steuereinrichtung verbunden, die den Versatzantrieb steuert und die erste Barre in entgegengesetzte Richtungen bewegt, wobei die Sensoranordnung dazu ausgebildet ist in beiden Richtungen die Positionen bei der vorbestimmten Annäherung der ersten Wirkwerkzeuge an die zweiten Wirkwerkzeuge zu ermitteln. Damit ist es möglich, einer Kollision in beiden Bewegungsrichtungen vorzubeugen.

Vorzugsweise ist die erste Barre als Legebarre mit Legenadeln als erste Wirkwerkzeuge ausgebildet und die zweite Barre ist als Wirknadelbarre mit Wirknadeln als zweite Wirkwerkzeuge ausgebildet. Der Begriff "Legenadel" ist hier allgemein als "Fadenführer" zu verstehen. Die Legenadel kann beispielsweise durch eine Lochnadel gebildet sein, die an ihrer Spitze ein Loch aufweist, durch die ein Faden geführt ist. Die Legenadel kann auch als Röhrchen ausgebildet sein, durch das ein Faden geführt ist. Üblicherweise wird die Legebarre in Versatzrichtung hin und her bewegt. In seltenen Fällen wird auch die Wirknadelbarre in Versatzrichtung gegenüber der Legebarre bewegt. Die angegebene Lösung ist auch dann anwendbar. Man kann man der Verschlechterung der Qualität der erzeugten Wirkware vorbeugen

Hierbei ist bevorzugt, dass die Steuereinrichtung dazu ausgebildet aus den beiden Positionen eine Mittelposition der Legebarre zu ermitteln, bei der die Legenadeln in der Mitte von Nadelgassen zwischen Wirknadeln positioniert sind. Die Mittelposition der Legebarre ist die optimale Position. Selbst wenn sich ausgehend von der Mittelposition kleine Änderungen in der Positionierung der Legebarre ergeben, ist die Gefahr einer Kollision zwischen Legenadeln und Wirknadeln im Betrieb oder die Gefahr einer Qualitätsverminderung der erzeugten Wirknadeln relativ klein.

Bevorzugterweise ermittelt die Sensoranordnung die Position im Betriebszustand der Kettenwirkmaschine. Die Ermittlung der Position oder der Positionen kann ohne Umrüstung der Kettenwirkmaschine erfolgen. Sie kann mit zeitlichen Abständen erfolgen oder in Abhängigkeit von Änderungen in Umgebungsbedingungen. Wenn die Sensoranordnung die Position oder Positionen im Betriebszustand der Kettenwirkmaschine ermittelt, kann sie die Positionen unmittelbar an die Steuereinrichtung weitergeben, die dann ihrerseits die Bewegung der ersten Barre entsprechend steuert.

Vorzugsweise weist das Sensor-Wirkwerkzeug zumindest in Versatzrichtung eine größere Erstreckung als die anderen ersten Wirkwerkzeuge der ersten Barre auf. Mit anderen Worten ist das Sensor-Wirkwerkzeug etwas "dicker". Damit ist es möglich, das Sensor-Wirkwerkzeug in Kontakt mit einem zweiten Wirkwerkzeug kommen zu lassen, bevor die anderen ersten Wirkwerkzeuge in Kontakt mit den ihnen zugeordneten zweiten Wirkwerkzeuge kommen. In diesem Fall kann das Sensor- Wirkwerkzeug den Schalter durch eine Berührung mit dem zweiten Wirkwerkzeug schließen, was man durch eine elektrische Widerstandsmessung überwachen kann.

Alternativ dazu kann man, wenn die ersten Wirkwerkzeuge an Positionen angeordnet sind, die durch eine Teilung bestimmt ist, das Sensor-Wirkwerkzeug an einer Position anordnen, die einen vorbestimmten Abstand zu einer Teilungsposition aufweist. Auch in diesem Fall kann man dafür sorgen, dass das Sensor-Wirkwerkzeug in Kontakt mit einem zweiten Wirkwerkzeug kommt, bevor die anderen ersten Wirkwerkzeuge der ersten Barre in Kontakt mit den zweiten Wirkwerkzeug kommen. Wenn man die Annäherung der ersten Wirkwerkzeuge an die zweiten Wirkwerkzeuge in beide Bewegungsrichtungen der ersten Barre ermitteln möchte, dann wird man ein Sensor-Wirkwerkzeug in eine erste Richtung relativ zur Teilung versetzt anordnen und ein anderes Sensor-Wirkwerkzeug in die entgegengesetzte Richtung versetzt zur Teilung anordnen. Damit können die beiden Sensor-Wirkwerkzeuge jeweils in Kontakt mit entsprechenden zweiten Wirkwerkzeugen kommen, bevor die anderen ersten Wirkwerkzeuge der ersten Barre die zweiten Wirkwerkzeuge berühren.

Alternativ oder zusätzlich kann man auch vorsehen, dass das Schaltelement als kapazitives oder induktives Schaltelement ausgebildet ist. Damit ist es nicht erforderlich, dass das Sensor-Wirkwerkzeug oder ein anderes erstes Wirkwerkzeug ein benachbartes zweites Wirkwerkzeug berührt. Es reicht aus, wenn das Sensor-Wirkwerkzeug oder das andere erste Wirkwerkzeug dem zweiten Wirkwerkzeug so nahekommt, dass sich eine ausreichende Änderung einer Kapazität eines Kondensators oder eines induktiven Widerstands einer Induktivität ergibt, der durch die beiden Wirkwerkzeuge, also das Sensor-Wirkwerkzeug oder erste Wirkwerkzeug und das zweite Wirkwerkzeug, gebildet ist. Unter Umständen kann es hierzu erforderlich sein, das Sensor- Wirkwerkzeug mit einer Beschichtung auszubilden, die eine entsprechend höhere Dielektrizitätskonstante als Luft aufweist. Die Kapazitäts- oder Induktivitätsänderung kann beispielsweise zu einer Spannungsänderung oder Frequenzverstimmung in dem Schaltkreis führen, was wiederum zum Durchschalten oder Betätigen eines Halbleiterschalters führt.

In einer zusätzlichen Ausgestaltung kann vorgesehen sein, dass die Sensoranordnung eine Kamera aufweist, die dazu ausgebildet ist einen Näherungsbereich zwischen mindestens einer Legenadel und einer Wirknadel aufzunehmen. Die Kamera kann das erste Wirkwerkzeug bei seiner Annäherung an das zweite Wirkwerkzeug beobachten. Durch eine entsprechende Bildauswertung kann man dann erkennen, ob sich das erste Wirkwerkzeug bis zu einem vorbestimmten Abstand oder sogar bis zu einer Berührung an das zweite Wirkwerkzeug angenähert hat.

Weiterhin kann man vorsehen, dass an oder auf der ersten Barre und/oder der zweiten Barre einen Beschleunigungssensor oder in einem vorbestimmten Abstand zu der ersten Barre und/oder zweiten Barre ein Mikrofon angeordnet ist. Wenn die ersten Wirkwerkzeuge mit den zweiten Wirkwerkzeugen kollidieren, erfasst der Beschleunigungssensor eine Änderung des Bewegungszustandes von mindestens einer der Barren oder das Mikrofon erfasst ein entsprechendes Geräusch. Beide Signale sind dann ein eindeutiges Zeichen dafür, dass erstere Werkzeuge und weitere Werkzeuge in Kontakt miteinander gekommen sind.

Die Aufgabe wird bei einem Verfahren der eingangs genannten Art dadurch gelöst, dass man die vorbestimmte Annäherung elektrisch ermittelt.

Wenn man überwacht, wie sich das erste Wirkwerkzeug an das zweite Wirkwerkzeug annähert, dann kann man einer Kollision vorbeugen oder einen leichten Kontakt gesteuert bewirken. Auch kann man dafür sorgen, dass im Betrieb der Abstand zwischen ersten Wirkwerkzeugen und zweiten Wirkwerkzeugen immer groß genug ist, um eine zufriedenstellende Qualität der erzeugten Wirkware zu erzielen. Die elektrische Ermittlung kann durch einen Kontakt zwischen dem Sensor- Wirkwerkzeug und einem zweiten Wirkwerkzeug erfolgen, was sich durch Messung eines Ohm'schen Widerstands feststellen lässt. Die Ermittlung kann auch dadurch erfolgen, dass man die Änderung einer Kapazität oder einer Induktivität zwischen der Sensor-Legenadel und einer benachbarten Wirknadel ermittelt.

Vorzugsweise ermittelt man für beide Bewegungsrichtungen der ersten Barre eine Position, bei der mindestens ein erstes Wirkwerkzeug die vorbestimmte Annäherung an ein zweites Wirkwerkzeug erreicht hat. Man kann dann im Betrieb für beide Bewegungsrichtungen der ersten Barre eine Kollision vermeiden und einen entsprechenden Abstand zwischen ersten Wirkwerkzeugen und zweiten Wirkwerkzeugen erreichen, der für die Erzeugung einer Wirkware mit zufriedenstellender Qualität ausreicht.

Auch ist von Vorteil, wenn man aus den beiden Positionen eine Mittelposition der ersten Barre ermittelt, in der die ersten Wirkwerkzeuge in der Mitte von Nadelgassen zwischen zweiten Wirkwerkzeugen positioniert sind. Diese Ermittlung kann auch im Betriebszustand der Kettenwirkmaschine erfolgen. Die Mittelposition kann dann für die Steuerung der Bewegung der ersten Barre als Ausgangspunkt verwendet werden. Dies ist insbesondere dann von Vorteil, wenn die erste Barre durch einen elektrischen Antrieb gesteuert wird.

Zusätzlich kann man die vorbestimmte Annäherung auch optisch durch eine Kamera, akustisch durch ein Mikrofon oder durch einen Schwingungsaufnehmer ermitteln.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung von Teilen einer Kettenwirkmaschine und
- Fig. 2: eine schematische Darstellung zur Ermittlung der Annäherung zwischen Legenadel und Wirknadel.

In allen Figuren sind gleiche Elemente mit den gleichen Bezugszeichen versehen.

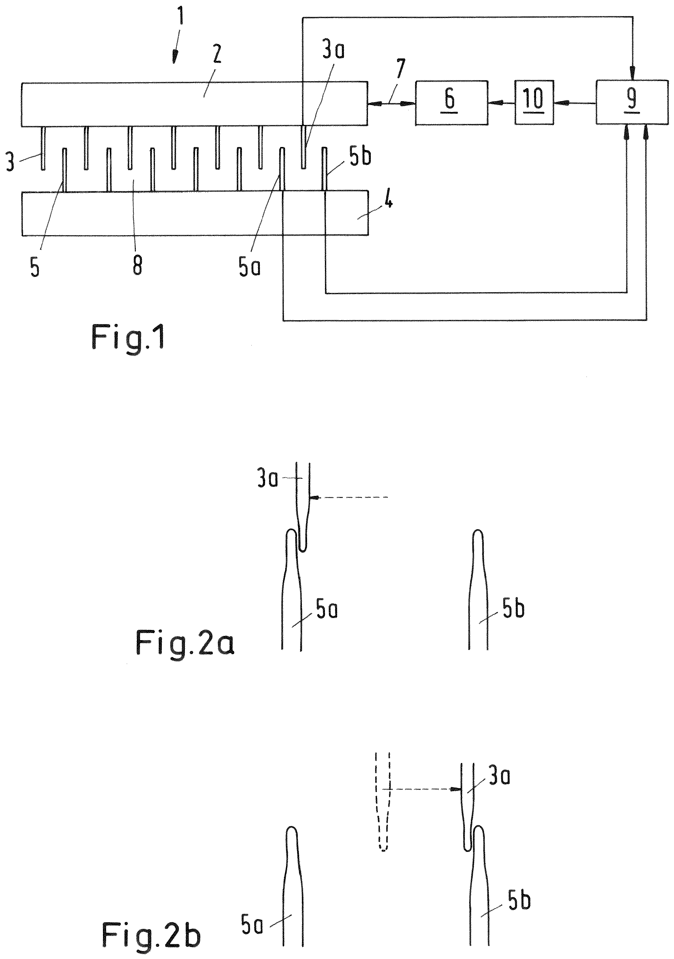

Fig. 1 zeigt stark schematisiert Teile einer Kettenwirkmaschine 1, nämlich eine Legebarre 2 als erste Barre, an der eine Vielzahl von Legenadeln 3 als erste Wirkwerkzeuge angeordnet sind. Die Legenadeln 3 können allgemein auch als "Fadenführer" bezeichnet werden. Die Legenadeln 3 können als Lochnadeln ausgebildet sein. Sie können aber auch beispielsweise in Form von Fadenführerröhrchen vorliegen.

Ferner weist die Kettenwirkmaschine 1 eine Wirknadelbarre 4 als zweite Barre auf, an der eine Anzahl von Wirknadeln 5 als zweite Wirkwerkzeuge angeordnet sind.

Die nachfolgende Erläuterung der Erfindung erfolgt anhand der Legebarre 2 und der Wirknadelbarre 4 als Beispiel. Die Erfindung ist jedoch auch bei anderen Barrenkonstellationen anwendbar.

Im Betrieb der Kettenwirkmaschine 1 wird die Legebarre 2 durch einen Antrieb 6 in Versatzrichtung, die hier durch einen Doppelpfeil 7 symbolisiert ist, hin und her bewegt. Die Versatzrichtung 7 verläuft parallel zur Längserstreckung der Legebarre 2. Für eine Maschenbildung beim Herstellen einer Kettenwirkware ist darüber hinaus eine Bewegung der Legenadeln 3 durch Nadelgassen 8 erforderlich, die zwischen den Wirknadeln 5 ausgebildet sind. Diese Bewegung kann dadurch erfolgen, dass die Legebarre 2 senkrecht zur Versatzrichtung 7 bewegt wird. Alternativ dazu kann auch die Wirknadelbarre 4 senkrecht zur Versatzrichtung bewegt werden.

Bei einem Maschenbildungsvorgang wird also die Legebarre 2 einmal in Versatzrichtung 7 bewegt. Danach schwingen die Legenadeln 3 durch die Nadelgassen 8 hindurch. Die Legebarre 2 wird dann in Versatzrichtung 7 wieder zurückbewegt und die Legenadeln 3 schwingen erneut durch die Nadelgassen 8 hindurch.

Die Nadelgassen 8 sind hier übertrieben groß dargestellt. In einer Kettenwirkmaschine haben die Nadelgassen 8 vielfach eine Breite, also einen Abstand zwischen den Wirknadeln 5 in Versatzrichtung 7, von weniger als 1 mm. Gleichzeitig müssen die Legenadeln 3 in Versatzrichtung auch eine gewisse Dicke haben, damit sie ausreichend stabil sind. Im Idealfall sollten daher die Legenadeln 3 in der Mitte der Nadelgassen 8 stehen, wenn sie durch die Nadelgassen 8 hindurchbewegt werden. Sollte die Position der Legenadeln 3 von dieser mittigen Position stark abweichen, kann es im Betrieb zu Kollisionen zwischen den Legenadeln 3 und den Wirknadeln 5 kommen, was zu einer Beschädigung der Legenadeln 3 und/oder der Wirknadeln 5 führen kann und dann eine aufwändige Reparatur erfordert. Auch wenn eine Kollision noch nicht erfolgt, ergibt sich vielfach eine Verschlechterung der Qualität einer so erzeugten Wirkware, wenn die Legenadeln 3 zu dicht an den Wirknadeln 5 vorbeilaufen.

Man verwendet daher im vorliegenden Fall eine Sensoranordnung 9, mit der man die Position der Legebarre 2 ermittelt, wenn sich die Legenadeln 3 und die Wirknadeln 5 aneinander annähern.

Dies soll anhand von Fig. 2 beschrieben werden.

Bei den Legenadeln 3 gibt es eine Legenadel, die im Folgenden als "Sensor-Legenadel" 3a beschrieben wird. Diese Sensor-Legenadel 3a ist zwischen zwei Wirknadeln 5a, 5b angeordnet. Im vorliegenden Ausführungsbeispiel ist die Sensor-Legenadel 3a die äußerste Legenadel. Dies ist aber nicht zwingend.

Wie in Fig. 2a dargestellt, wird die Sensor-Legenadel 3a durch den Versatzantrieb 6 in Versatzrichtung 7 so weit bewegt, bis sie die Wirknadel 5a berührt. Danach wird sie, wie man dies in Fig. 2b erkennen kann, so weit in die entgegengesetzte Richtung bewegt, bis sie die andere Wirknadel 5b berührt. Diese Bewegungen erfolgen dadurch, dass die Legebarre 2 durch den Versatzantrieb 6 angetrieben wird.

Der Versatzantrieb 6 ist ein elektrischer Antrieb, beispielsweise in Form eines elektrischen Motors, beispielsweise eines Schrittmotors. Der Versatzantrieb 6 kann also die Position der Legebarre 2 mindestens dann bestimmen, wenn er ein entsprechendes Signal erhält. Dieses Signal wird durch die Berührung zwischen der Sensor-Legenadel 3a und einer Wirknadel 5a, 5b ausgelöst.

Das Auslösen kann beispielsweise dadurch erfolgen, dass die Sensoranordnung 9 eine Gleichspannung an die Sensor-Legenadel 3a und an die beiden Wirknadeln 5a, 5b anlegt. Wenn die Sensor-Legenadel 3a eine der beiden Wirknadeln 5a, 5b berührt, ergibt sich ein elektrischer Kontakt, der zu einem Stromfluss führt. Dieser Stromfluss kann von der Sensoranordnung 9 erfasst werden.

Es ist auch möglich, eine Wechselspannung zwischen der Sensor-Legenadel 3a und den beiden Wirknadeln 5a, 5b anzulegen. In diesem Fall kann man mit Hilfe der Sensor-Legenadel 3a und den beiden Wirknadeln 5a, 5b, genauer gesagt zwischen der Sensor-Legenadel 3a und jeweils einer der Wirknadeln 5a, 5b, jeweils eine Änderung der Kapazität oder der Induktivität ermitteln, wenn sich die Sensor-Legenadel 3a ausreichend weit an die Wirknadel 5a bzw. an die Wirknadel 5b angenähert hat. Auch in diesem Fall kann man die Anordnung als Schaltkreis mit einem Schalter betrachten, der als Schaltelement mindestens die Sensor-Legenadel 3a aufweist.

In beiden Fällen kann man die Sensor-Legenadel 3a in Versatzrichtung 7 etwas dicker ausbilden als die anderen Legenadeln 3. In diesem Fall kommt die Sensor-Legenadel 3a in Kontakt mit der Wirknadel 5a bzw. der Wirknadel 5b, bevor die anderen Legenadeln 3 in Kontakt mit den anderen Wirknadeln 5 kommen.

Sobald die Sensoranordnung 9 den Kontakt (oder bei Verwendung der Sensor-Legenadel 3a für einen kapazitiven oder induktiven Schalter die ausreichende Annäherung) festgestellt hat, ist die Position der Legebarre 2 für die beiden Extrempositionen ermittelt. Man kann nun aus diesen beiden Extrempositionen, in denen die Sensor-Legenadel 3a Kontakt mit den benachbarten Wirknadeln 5a, 5b oder eine ausreichende Annäherung an diesen Wirknadeln 5a, 5b hat, verwenden, um eine Position der Legebarre 2 zu bestimmen, in der die Sensor-Legenadel 3a genau in der Mitte der Nadelgasse 8 angeordnet ist. Diese Position kann dann der Versatzantrieb 6 als Ausgangspunkt für die weitere Steuerung der Bewegung der Legebarre 2 verwenden.

Alternativ oder zusätzlich zu einer etwas dickeren Sensor-Legenadel 3a kann man die Sensor-Legenadel 3a auch etwas außerhalb der Teilung anordnen, beispielsweise geringfügig dichter (wenige hundertstel Millimeter) an der Wirknadel 5a. Auch in diesem Fall kommt die Sensor-Legenadel 3a in Versatzrichtung nach links (bezogen auf die Darstellung der Fig. 1) in Kontakt mit der Wirknadel 5a, bevor die anderen Legenadeln 3 in Kontakt mit der Wirknadel 5 kommen. Für die andere Bewegungsrichtung wird man dann zweckmäßigerweise eine andere Sensor-Legenadel verwenden oder man positioniert die beiden Wirknadeln 5a, 5b etwas dichter zueinander, also ebenfalls geringfügig der durch die Teilung der Legenadeln 3 und der Wirknadeln 5 bestimmten Positionen.

Üblicherweise sind die Legenadeln 3 in so genannten "Fassungen" verbaut. Es ist daher zweckmäßig, die entsprechenden Fassungen außerhalb der Positionen zu montieren, die durch die Teilung vorgegeben sind.

In einer nicht dargestellten alternativen Ausgestaltung kann man die Position der Sensor-Legenadel 3a oder jeder andere Legenadel 3 zusätzlich durch eine Kamera fortlaufend erfassen und durch ein Bildauswerteprogramm feststellen, wann ein Kontakt oder wann ein gewünschter minimaler Abstand erreicht ist und für diesen Augenblick die Position der Legebarre 2 in Versatzrichtung 7 ermitteln.

In nicht näher dargestellter Weise kann man eine Annäherung der Legenadeln 3 an die Wirknadeln 5 zusätzlich auch durch ein Mikrofon ermitteln, also auf akustische Weise.

Das Mikrofon ist dann in der Nähe der Legebarre 2 oder der Wirknadelbarre 4 angeordnet. Wenn die Legenadeln 3 und die Wirknadeln 5 miteinander in Kontakt kommen, entsteht ein Geräusch, das ein Zeichen für den Kontakt ist. Dieses Geräusch wird durch das Mikrofon erfasst und kann an die Steuerung weitergegeben werden.

Eine weitere Möglichkeit besteht darin, an oder auf der Legebarre 2 und/oder der Wirknadelbarre 4 zusätzlich einen Beschleunigungsaufnehmer oder Beschleunigungssensor anzubringen. Wenn die Legenadeln 3 mit den Wirknadeln 5 in Kontakt kommen, ändert sich der Bewegungszustand von mindestens einer der Barren 2, 4. In der Regel entsteht sogar eine Schwingung, die vom Beschleunigungssensor erfasst werden kann.

Die Ermittlung der optimalen Position der Legebarre 2 kann erfolgen, ohne dass man zusätzliche Elemente in die Kettenwirkmaschine einbauen muss. Sie kann also im Betriebszustand der Kettenwirkmaschine erfolgen.

Das Verstellen der Position der Legebarre 2 kann beispielsweise von Hand am Bedienteil der Kettenwirkmaschine erfolgen oder automatisch mit einer Teilungsoptimierungsfunktion. Hierbei wird die Legebarre 2 mit Hilfe des Versatzantriebs 6 beispielsweise in 0,01 mm-Schritten an die "Grenzpositionen", in der die Sensor-Legenadel 3a einen Kontakt mit der Wirknadel 5a bzw. der Wirknadel 5b hat (oder dem entsprechenden gewünschten minimalen Abstand) bewegt. Der arithmetische Mittelwert zwischen diesen beiden Grenzpositionen kann bestimmt werden und an den Versatzantrieb 6 oder dessen Steuerung übergeben werden.

Die Legebarre 2 kann über diese Funktion im laufenden Betrieb äußere Einflüsse kompensieren und stets im optimalen Arbeits- bzw. Teilungsbereich zur Wirknadelbarre 4 betrieben werden.

## Patentansprüche

1. Kettenwirkmaschine (1) mit mindestens einer ersten Barre (2), die erste Wirkwerkzeuge (3, 3a) trägt, und mindestens einer zweiten Barre (4), die zweite Wirkwerkzeuge (5, 5a, 5b) trägt, wobei die erste Barre (2) durch einen Versatzantrieb (6) in eine Versatzrichtung (7) relativ zur zweiten Barre (4) verlagerbar ist, wobei eine Sensoranordnung (8) vorgesehen ist, die dazu ausgebildet ist eine Position der ersten Barre (2) bei einer vorbestimmten Annäherung zwischen ersten Wirkwerkzeugen (3, 3a) und zweiten Wirkwerkzeugen (5, 5a, 5b) zu ermitteln, **dadurch gekennzeichnet, dass** die Sensoranordnung (8) einen elektrischen Schaltkreis mit einem Schalter aufweist, der als Schaltelement mindestens ein Sensor- Wirkwerkzeug (3a) aufweist.

2. Kettenwirkmaschine nach Anspruch 1, **dadurch gekennzeichnet, dass** die Sensoranordnung (8) mit einer Steuereinrichtung (9) verbunden ist, die den Versatzantrieb (6) steuert und die erste Barre (2) in entgegengesetzte Richtungen bewegt, wobei die Sensoranordnung (8) dazu ausgebildet ist in beiden Richtungen die Positionen bei der vorbestimmten Annäherung der ersten Wirkwerkzeuge (3, 3a) an die zweiten Wirkwerkzeuge (5, 5a, 5b) zu ermitteln.

3. Kettenwirkmaschine nach Anspruch 1 oder 2, **dadurch gekennzeichnet, dass** die erste Barre als Legebarre mit Legenadeln als erste Wirkwerkzeuge ausgebildet ist und die zweite Barre als Wirknadelbarre mit Wirknadeln als zweite Wirkwerkzeuge ausgebildet ist.

4. Kettenwirkmaschine nach Anspruch 3, **dadurch gekennzeichnet, dass** die Steuereinrichtung (9) dazu ausgebildet ist aus den beiden Positionen eine Mittelposition der Legebarre (2) zu ermitteln, bei die die Legenadeln (3, 3a) in der Mitte von Nadelgassen (8) zwischen Wirknadeln (5, 5a, 5b) positioniert sind.

5. Kettenwirkmaschine nach einem der Ansprüche 1 bis 4, **dadurch gekennzeichnet, dass** die Sensoranordnung (8) dazu ausgebildet ist die Position im Betriebszustand der Kettenwirkmaschine (1) zu ermitteln.

6. Kettenwirkmaschine nach einem der Ansprüche 1 bis 5, **dadurch gekennzeichnet, dass** das Sensor- Wirkwerkzeug (3a) zumindest in Versatzrichtung eine größere Erstreckung als die anderen Wirkwerkzeuge (3) der ersten Barre (2) aufweist oder die ersten Wirkwerkzeuge (3) an Positionen angeordnet sind, die durch eine Teilung bestimmt ist, wobei das Sensor- Wirkwerkzeug (3a) an einer Position angeordnet ist, die einen vorbestimmten Abstand zu einer Teilungsposition aufweist.

7. Kettenwirkmaschine nach einem der Ansprüche 1 bis 6, **dadurch gekennzeichnet, dass** das Schaltelement als kapazitives oder induktives Schaltelement ausgebildet ist.

8. Kettenwirkmaschine nach einem der Ansprüche 1 bis 7, **dadurch gekennzeichnet, dass** die Sensoranordnung (8) zusätzlich eine Kamera aufweist, die dazu ausgebildet ist einen Näherungsbereich zwischen mindestens einer Legenadel (3, 3a) und eine Wirknadel (5, 5a, 5b) aufzunehmen.

9. Kettenwirkmaschine nach einem der Ansprüche 1 bis 8, **dadurch gekennzeichnet, dass** zusätzlich an oder auf der ersten Barre und/oder der zweiten Barre ein Beschleunigungssensor oder in einem vorbestimmten Abstand zu der ersten Barre oder der zweiten Barre ein Mikrofon angeordnet ist.

10. Verfahren zum Steuern einer Bewegung einer erste Wirkwerkzeuge (3, 3a) tragenden ersten Barre (2) einer Kettenwirkmaschine (1), bei dem die erste Barre (2) in einer Versatzrichtung (7) relativ zu einer zweiten Barre (4), die zweite Wirkwerkzeuge (5, 5a, 5b) trägt, bewegt wird, wobei man eine Position der ersten Barre (2) ermittelt, bei der mindestens ein erstes Wirkwerkzeug (3, 3a) eine vorbestimmte Annäherung an ein zweites Wirkwerkzeug (5, 5a, 5b) erreicht hat, **dadurch gekennzeichnet, dass** man die vorbestimmte Annäherung elektrisch mit einem Sensor-Wirkwerkzeug (3a) als Schaltelement in einem elektrischen Schaltkreis ermittelt.

11. Verfahren nach Anspruch 10, **dadurch gekennzeichnet, dass** man für beide Bewegungsrichtungen der ersten Barre (2) eine Position ermittelt, bei der mindestens ein erstes Wirkwerkzeug (3, 3a) die vorbestimmte Annäherung an ein zweites Wirkwerkzeug (5, 5a, 5b) erreicht hat.

12. Verfahren nach Anspruch 11, **dadurch gekennzeichnet, dass** man aus den beiden Positionen eine Mittelposition der ersten Barre (2) ermittelt, in der die ersten Wirkwerkzeuge (3, 3a) in der Mitte von Nadelgassen (8) zwischen zweiten Wirkwerkzeugen (5, 5a, 5b) positioniert sind.

13. Verfahren nach einem der Ansprüche 10 bis 12, **dadurch gekennzeichnet, dass** man die vorbestimmte Annäherung zusätzlich optisch durch eine Kamera, akustisch durch ein Mikrofon oder durch einen Schwingungsaufnehmer ermittelt.

## Claims

1. Warp knitting machine (1) having at least one first bar (2), which carries first knitting tools (3, 3a) and at least one second bar (4) which carries second knitting tools (5, 5a, 5b), wherein the first bar (2) can be displaced by an offset drive (6) in an offset direction (7) relative to the second bar (4), wherein a sensor arrangement (8) is provided which is designed to determine a position of the first bar (2) at a predetermined proximity between first knitting tools (3, 3a) and second knitting tools (5, 5a, 5b), **characterized in that** the sensor arrangement (8) comprises an electrical circuit with a switch which comprises at least one sensor knitting tool (3a) as switching element.

2. Warp knitting machine according to Claim 1, **characterized in that** the sensor arrangement (8) is connected to a control device (9) which controls the offset drive (6) and moves the first bar (2) in opposite directions, wherein the sensor arrangement (8) is designed to determine the positions in both directions at the predetermined proximity of the first knitting tools (3, 3a) to the second knitting tools (5, 5a, 5b).

3. Warp knitting machine according to Claims 1 or 2, **characterized in that** the first bar is configured as a guide bar with guide needles as first knitting tools and the second bar is configured as a knitting needle bar with knitting needles as second knitting tools.

4. Warp knitting machine according to Claim 3, **characterized in that** the control device (9) is designed to determine from the two positions a central position of the guide bar (2) in which the guide needles (3, 3a) are positioned at the centre of needle space (8) between knitting needles (5, 5a, 5b).

5. Warp knitting machine according to one of Claims 1 to 4, **characterized in that** the sensor arrangement (8) is designed to determine the position in the operating state of the warp knitting machine (1).

6. Warp knitting machine according to any of claims 1 to 5, **characterized in that** the sensor knitting tool (3a) has a greater extension than the other knitting tools (3) of the first bar (2) at least in the offset direction or the first knitting tools (3) are arranged at positions which are determined by a pitch, wherein the sensor knitting tool (3a) is arranged at a position which has a predetermined distance from a pitch position.

7. Warp knitting machine according to any of claims 1 to 6, **characterized in that** the switching element is configured as a capacitive or inductive switching element.

8. Warp knitting machine according to one of Claims 1 to 7, **characterized in that** the sensor arrangement (8) additionally has a camera which is designed to photograph a proximity region between at least one guide needle (3, 3a) and a knitting needle (5, 5a, 5b).

9. Warp knitting machine according to one of Claims 1 to 8, **characterized in that** additionally an acceleration sensor is arranged at or on the first bar and/or the second bar or a microphone is arranged at a predetermined distance from the first bar or the second bar.

10. Method for controlling a movement of a first bar (2) of a warp knitting machine (1) carrying first knitting tools (3, 3a) in which the first bar (2) is moved in an offset direction (7) relative to a second bar (4) which carries second knitting tools (5, 5a, 5b), wherein a position of the first bar (2) is determined in which at least one first knitting tool (3, 3a) has reached a predetermined proximity to a second knitting tool (5, 5a, 5b), **characterized in that** the predetermined proximity is determined electrically with a sensor knitting element (3a) as a switching element in an electrical circuit.

11. Method according to Claim 10, **characterized in that** for both directions of movement of the first bar (2) a position is determined in which at least one first knitting tool (3, 3a) has reached the predetermined proximity to a second knitting tool (5, 5a, 5b).

12. Method according to Claim 11, **characterized in that** a central position of the first bar (2) is determined from the two positions in which the first knitting tools (3, 3a) are positioned at the centre of needle spaces (8) between second knitting tools (5, 5a, 5b).

13. Method according to one of Claims 10 to 12, **characterized in that** the predetermined proximity is determined additionally optically by a camera, acoustically by a microphone or by a vibration transducer.

## Revendications

1. Métier à mailles jetées (1) avec au moins une première barre (2), qui porte des premiers éléments de tricotage (3, 3a) et au moins une deuxième barre (4), qui porte des deuxièmes éléments de tricotage (5, 5a, 5b), sachant que la première barre (2) peut être déplacée par un entraînement de décalage (6) dans une direction de décalage (7) par rapport à la deuxième barre (4), sachant qu'un système de détection (8) est prévu, qui est constitué pour déterminer une position de la première barre (2) pour une approche prédéfinie entre des premiers éléments de tricotage (3, 3a) et des deuxièmes éléments de tricotage (5, 5a, 5b), **caractérisé en ce que** le système de détection (8) comporte un circuit électrique avec un commutateur, qui comporte au moins un élément de tricotage à capteur (3a) en tant qu'élément de connexion.

2. Métier à mailles jetées (1), selon la revendication 1, **caractérisé en ce que** le système de détection (8) est relié à un dispositif de commande (9) qui commande l'entraînement de décalage (6) et la première barre (2) se déplace dans des directions opposées, sachant que le système de détection (8) est constitué pour déterminer dans les deux directions les positions pour l'approche prédéfinie des premiers éléments de tricotage (3, 3a) sur les deuxièmes éléments de tricotage (5, 5a, 5b).

3. Métier à mailles jetées (1), selon l'une quelconque des revendications 1 ou 2, **caractérisé en ce que** la première barre est constituée sous la forme de barre à passettes avec des aiguilles à passettes comme premiers éléments de tricotage et la deuxième barre est constituée sous la forme de barre à aiguilles à tricoter avec des aiguilles à tricoter comme deuxièmes éléments de tricotage.

4. Métier à mailles jetées (1), selon la revendication 3, caractérisé ce que le dispositif de commande (9) est constitué pour déterminer à partir des deux positions, une position médiane de la barre à passettes (2) pour laquelle les aiguilles à passettes (3, 3a) sont positionnées au centre des interstices d'aiguilles (8) entre les aiguilles à tricoter (5, 5a, 5b).

5. Métier à mailles jetées (1), selon l'une quelconque des revendications 1 à 4, **caractérisé en ce que** le système de détection (8) est constitué pour déterminer la position à l'état de fonctionnement du métier à mailles jetées (1).

6. Métier à mailles jetées (1), selon l'une quelconque des revendications 1 à 5, **caractérisé en ce que** l'élément de tricotage à capteur (3a) comporte au moins en direction de décalage une extension plus grande que les autres éléments de tricotage (3) de la première barre (2) ou les premiers éléments de tricotage (3) sont disposés à des positions qui sont définies par une séparation, sachant que l'élément de tricotage à capteur (3a) est disposé à une position qui comporte un distance prédéfinie par rapport à une position de séparation.

7. Métier à mailles jetées (1), selon l'une quelconque des revendications 1 à 6, **caractérisé en ce que** l'élément de connexion est constitué sous la forme d'un élément de connexion capacitif ou inductif.

8. Métier à mailles jetées (1), selon l'une quelconque des revendications 1 à 7, **caractérisé en ce que** le système de détection (8) comporte en plus une caméra, qui est constituée pour enregistrer une zone d'approche entre au moins une aiguille à passettes (3, 3a) et une aiguille à tricoter (5, 5a, 5b).

9. Métier à mailles jetées (1), selon l'une quelconque des revendications 1 à 8, **caractérisé en ce qu'**un capteur d'accélération est disposé près de ou sur la première barre et/ou la deuxième barre ou un microphone est disposé à une distance prédéterminée par rapport à la première barre ou à la deuxième barre.

10. Procédé pour la commande d'un mouvement d'une première barre (2) d'un métier à mailles jetées (1), portant des premiers éléments de tricotage (3, 3a), pour lequel la première barre (2) est déplacée dans une direction de décalage (7) par rapport à une deuxième barre (4), qui porte les deuxièmes éléments de tricotage (5, 5a, 5b), sachant que l'on détermine une position de la première barre (2) pour laquelle au moins un premier élément de tricotage (3, 3a) a atteint une approche prédéfinie sur un deuxième élément de tricotage (5, 5a, 5b) **caractérisé en ce que** l'on détermine l'approche prédéfinie électriquement avec un élément de tricotage à capteur (3a) en tant qu'élément de connexion dans un circuit électrique.

11. Procédé selon la revendication 10, **caractérisé en ce que** l'on détermine pour deux directions de déplacement de la première barre (2), une position pour laquelle au moins un premier élément de tricotage (3, 3a) a atteint l'approche prédéfinie sur un deuxième élément de tricotage (5, 5a, 5b).

12. Procédé selon la revendication 11, **caractérisé en ce que** l'on détermine à partir des deux positions, une position médiane de la première barre (2) dans laquelle les premiers éléments de tricotage (3, 3a) sont positionnés au centre des interstices d'aiguilles (8) entre les deuxièmes éléments de tricotage (5, 5a, 5b).

13. Procédé selon l'une quelconque des revendications 10 à 12, **caractérisé en ce que** l'on détermine en plus l'approche prédéfinie optiquement par une caméra, acoustiquement par un microphone ou par un capteur d'oscillation.
